# EUROPEAN PATENT SPECIFICATION

(11) **EP 3 284 659 B1**
(45) Date of publication and mention of the grant of the patent: **20.02.2019**
(21) Application number: 17186096.8
(22) Date of filing: 14.08.2017
(51) Int. Cl.: B62D 33/02

(54) **A LOCKING UNIT FOR A STAKE**
EINE VERRIEGELUNGSEINHEIT FÜR EINE STANGE
UNE UNITÉ DE VERROUILLAGE POUR UN ENJEU

(30) Priority: 17.08.2016 EE 201600039 U
(43) Date of publication of application: 21.02.2018
(73) Proprietor: OÜ Palmse Mehaanikakoda, 45405 Lääne-Viru maakond (EE)
(72) Inventor: Puusepp, Anti, 45601 Lääne-Viru maakond (EE)
(74) Representative: Toome, Jürgen

(56) References cited:
- FR-A1- 2 335 719
- US-A- 4 057 286
- US-A- 4 768 588

## Description

### Technical Field

The present invention relates to the locking unit of a stake. The stakes in the aspect of the present invention are the lateral supports of the load platforms of transport vehicles, trailers or semi-trailers and more particularly of the forest trailers (timber carriers), in between of which for example logs or some other oblong material is loaded.

The present invention relates especially to the stakes, the end of which being inserted into a socket is at an angle in respect of the other portion thereof and the stake can be pivoted around its end inserted into the socket. The invention relates especially to the locking units of arched, i.e. inclined stakes, by the means of which said stakes are fixed to the chassis of a trailer or a transport vehicle or to the load platform.

### Background Art

From prior art various solutions are known wherein a stake can be pivoted to a limited degree when necessary. Pivoting of the stake is used for example in order to prevent its bending or breakage in case of hitting an obstacle (the branches of the trees, bushes) or during the loading of a commodity between the stakes when it may be struck by the loader or by the commodity being loaded.

One of the conventional solutions is to attach the stake to the socket with the help of a chain. One end of this chain is fixed to the stake and the other one to the socket. The chain has a sufficient amount of play so that it can turn slightly in the socket and at the same time it would not come out of the socket or turn too much.

The drawback of this kind of a solution is that the chains clatter during driving, additionally the branches of the trees and bushes may get jammed in them. Furthermore, in order to lift out the stakes it is necessary to unfasten the chains, for which purpose usually tools are needed and this will take quite a while.

Another known method is to fix a bolt with a washer to the lower end of the stake that will not permit the stake to come out of the socket.

This kind of design is quite applicable, but the shortcoming of this solution is the need to get at the stake and the socket from underneath. And again - removal and displacement of the stakes takes time and is troublesome since the tools are needed.

The present invention is provided to overcome the shortcomings as referred to above.

From the United States patent US 4057286 (published on 08.11.1977) rotatable stakes are known, which by their ends are attached with the help of bearings into the sockets that are inclined in respect of the bed of the load platform. In said solution the stakes are not detachable from the sockets without tools.

The object of the present invention is to provide a locking unit, into the socket of which the stake can be fixed and in case of need to be removed without tools.

In addition it is an object of the present invention to provide a locking unit, the main members of which are inside the locking unit, i.e. these members are concealed in other design elements of the locking unit and during the loading operation are protected from getting damaged.

Yet another aim of the present invention is to provide a locking unit, which in the main working position permits the stake to pivot away from and around the longitudinal axis of the socket without the locking mechanism of the stake in the socket being opening.

It is also an aim of the invention to provide a locking unit, which enables the stake to assume its main working position under the influence of gravity when said stake has pivoted around the longitudinal axis of the socket and away from its main working position.

Yet another object of the invention is to provide a locking unit, wherein removal of the stake, i.e. unlocking and removing from the socket is permitted in a position, in which the stake has been turned by 90° or more degrees from its main working position around its longitudinal axis.

### Summary of invention

The present invention provides the locking unit for a stake, said locking unit comprising a socket for receiving an end of the stake and locking said end of the stake pivotally into said socket.

According to the invention, the end of the stake to be inserted into the socket is formed as a tubular element, where proximate to the end of the stake inside of said end there is a rigidly attached locking ring having a radial cut-out, the plane of said locking ring is perpendicular to the longitudinal axis of the end of the stake.

The socket is manufactured as a cylindrical hollow component, into which a mainly plane clamping hook has been rigidly fixed.

In a locked position of the stake the end of the clamping hook is interlocked in the socket of the stake behind the locking ring, whereas in an unlocked position of the stake where said stake is removable from the socket, the end of the clamping hook is positioned in the cut-out area of the locking ring.

The end face of the socket receiving the end of the stake is at an angle in relation to the longitudinal axis of the socket.

Preferably in the proximity of the end of the stake inserted into the socket, there is onto its outer surface fastened outwardly from the socket at least one supporting protrusion.

In the first embodiment of the invention, on the outer surface of the stake there are fastened two supporting protrusions on both sides of the end of the stake, being in the form of pins transverse to the longitudinal axis of the end of the stake.

In the position of the stake having been inserted up to the end into the socket, the supporting protrusions rest on the end face of the socket. When the stake pivots in relation to the socket and at least one of said supporting protrusions slides along the end face of the socket, the end of the stake is made to shift outwards from the position fully inserted into the socket.

According to another preferred embodiment the supporting protrusions attached onto the outer surface of the stake are provided as elongated curved elements, the longitudinal axis thereof being at an angle in relation to the longitudinal axis of the stake corresponding to the angle of the end face of the socket with respect to the longitudinal axis of the socket.

In the position where the end of the stake have been inserted fully into the socket, the lateral surfaces of the supporting protrusions rest on the end face of the socket and when the stake turns in the socket in relation to the socket, at least one said supporting protrusion by sliding along the end face of the socket lifts said end of the stake from the position fully inserted into the socket outwards from the socket.

In a third preferred embodiment the supporting protrusion attached to the outer surface of the stake is provided as a tubular sleeve fixed onto the end of the stake, the socket side end face of which is at an angle to the longitudinal axis of the end of the stake that corresponds to the angle of the end face of the socket with respect to the longitudinal axis of the socket. When the end of the stake is inserted fully into the socket, the end face of said supporting protrusion rests on the end face of the socket, preferably to the extent of most of the surface, wherein by pivoting of the stake in the socket relative to it and due to sliding of the end face of said supporting protrusion along the end face of the socket, the end of the stake is made to shift outwards from the position fully inserted into the socket.

Preferably said clamping hook has a notch in the direction of the longitudinal axis of the socket, in the direction and extent of which the stake when being locked in the socket, permits the end of the stake to shift in the direction of the longitudinal axis of the socket.

Preferably said clamping hook comprises a support-step, onto which in an unlocked state of the end of the stake, rests the locking ring of the stake when said stake is inserted into the socket.

The pivoting angle of the stake in the socket is limited by the width of the cut-out in the locking ring.

In the most preferred embodiment the clamping hook comprises at least one supporting surface, which is preferably provided as a step in order to support the end face of the end of the stake when said end of the stake is fully inserted into the socket.

### Brief description of drawings

Further the device according to the invention will be described, referring to the accompanying schematic drawings illustrating the described embodiment thereof, in which:
Figure 1 illustrates a timber lorry trailer, containing six stakes and for each stake a respective locking unit according to the invention and a detailed view of such locking unit;

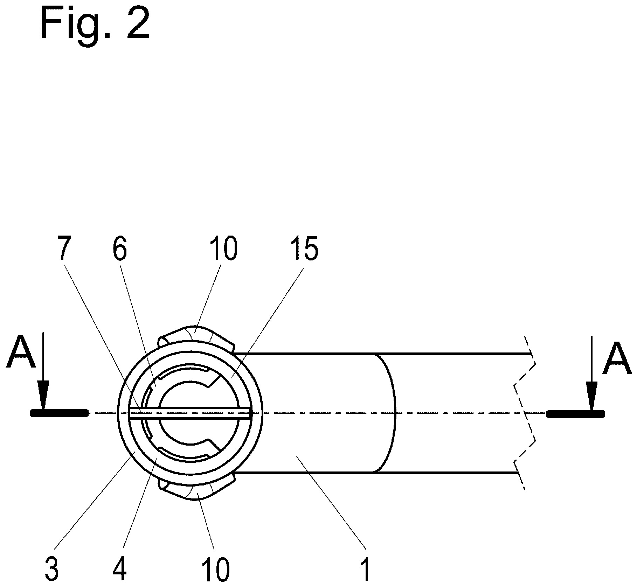

Figure 2 outlines a locking unit according to the present embodiment as seen from below - the cutting line A-A corresponds to the cutting plane for the views as shown in the following Figures 5, 6, 7, 9 and 11;
Figure 3 is a side view of the clamping hook of the locking unit according to the present invention;
Figure 4 is the locking ring of the locking unit according to the invention as seen from above;
Figure 5 is a partial cut view showing the clamping hook according to Figure 3 fixed in the socket;
Figure 6 is a partial cut view showing the locking ring according to Figure 4 fixed into the end of the stake;
Figure 7 and Figure 8 outline respectively a cut side view and a cut axonometric view of the end of the stake inserted up to the end into the socked in a locked position;
Figure 9 and Figure 10 depict respectively a cut side view and a cut axonometric view of the end of the stake locked into the socket in a position, in which it has been shifted upwards relative to the longitudinal axis of the socket;
Figure 11 and Figure 12 depict respectively a cut side view and a cut axonometric view of the stake turned by 180° in the socket compared to Figure 9 and Figure 10, being in its unlocked position.

### Description of embodiments

Further the embodiments of the invention will be described together with references to the accompanying drawings. Similar elements and details in different drawings have the same reference numbers. The unnecessary details, as the attachment elements of the socket to a trailer or to other construction elements of the transport vehicles have been omitted for the sake of clarity.

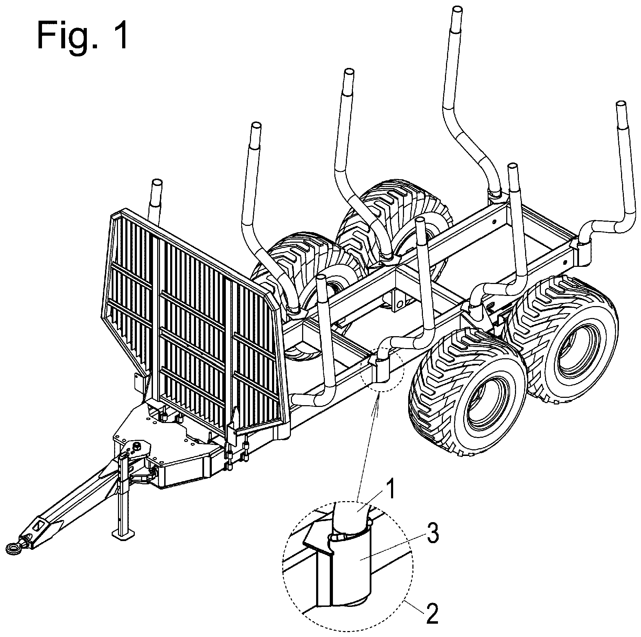

There is shown in Figure 1 a forest trailer containing eight stakes 1, wherein for each stake 1 there is a locking unit 2 of its own.

Locking unit 2 for receiving end 4 of stake 1 comprises a socket which in the example as shown in the drawings is attached to the chassis of a forest trailer. In a working situation (Figure 1) stake 1 with its end 4 is locked in the socket 3 so, that upon striking an obstacle stake 1 can swivel in socket 3 without opening the locking of end 4 of stake 1.

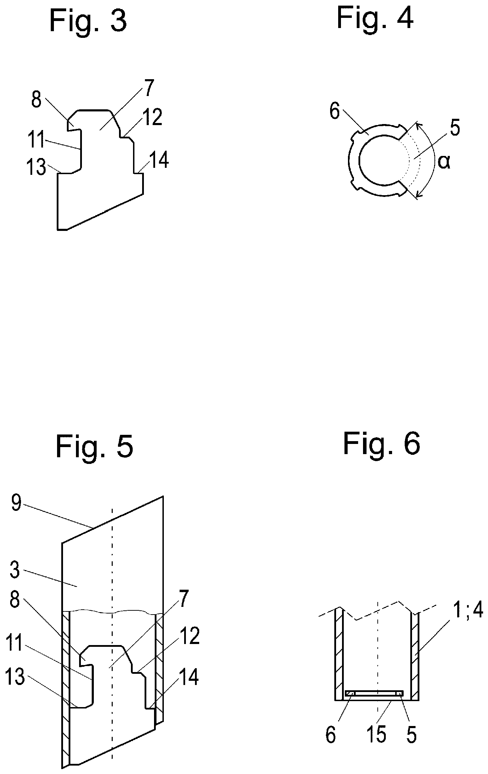

End 4 of stake 1 inserted into socket 3 is made as a tubular part, whereby close to its end inside stake 1 there is rigidly fastened locking ring 6, having in the radial direction out-cut 5 (Figure 4 and 6). As can be seen from the accompanying drawings, the plane of this locking ring 6 is transverse to the longitudinal axis 4 of stake 1. In the embodiments as shown in drawings the surface of end 4 of stake 1 is perpendicular to the longitudinal axis of end 4.

Socket 3 receiving end 4 of stake 1 is made as a detail having a cylindrical cavity, i.e. generally a substantially tubular detail, into which there is rigidly fixed mainly plain clamping hook 7, see Figure 3 and 5. Socket 3 is provided to be fixed to the chassis of a trailer or any other vehicle or a load platform so that the longitudinal axis of socket 3 is either vertical or tilted by a few degrees compared to the vertical.

End face 9 of socket 3 to receive stake 1 is at an angel relative to the longitudinal axis of socket 3.

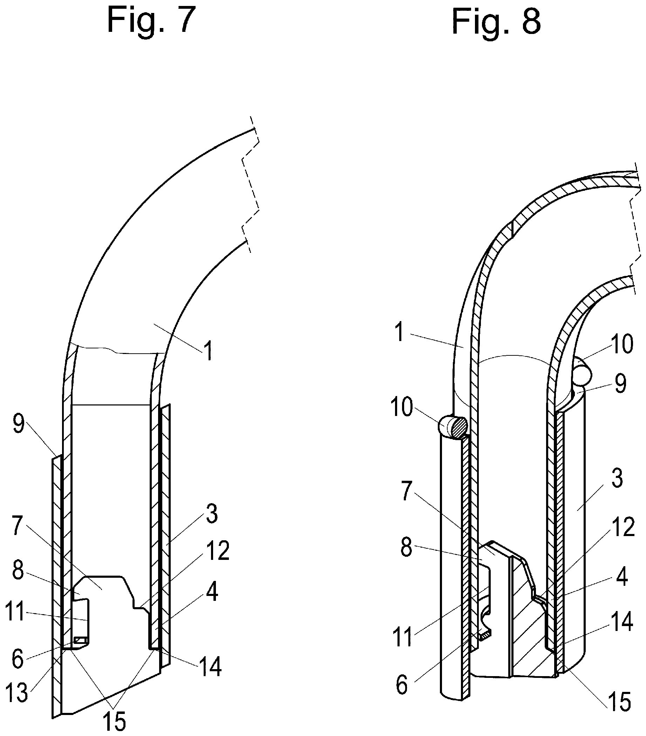

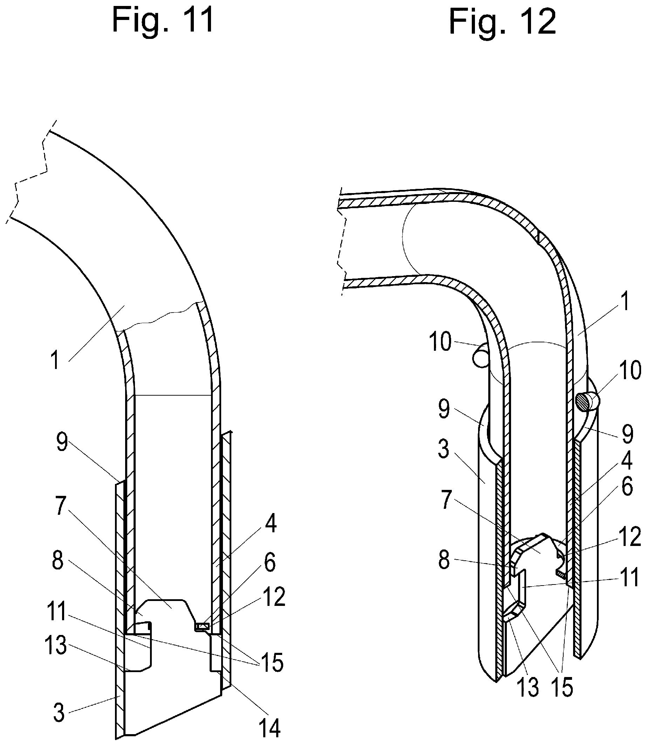

End 8 of clamping hook 7 being locked in socket 3 of stake 1 is provided to interlock behind locking ring 6 (see Figure 7, 8, 9, 10) and without locking stake 1 and in its detachable position from socket 3, end 8 of clamping hook 7 is provided to be mounted in cut-out 5 area of locking ring 6 (see Figure 11 and 12).

In the vicinity of end 4 of stake 1 to be inserted into socket 3 there is on the outer surface of stake 1 outward from socket 3 fixed at least one supporting protrusion 10. In the embodiments showed in the drawings there are two supporting protrusions on the opposite sides of the outer surface of the stake.

Said supporting protrusions 10 are made as pins (not shown) being traverse to the longitudinal axis of end 4 of stake 1, and when stake 1 is being inserted up to the end into socket 3, these supporting protrusions 10 rest on end face 9 of socket 3. The positon of stake 3 inserted up to the end into socket 3 corresponds to the position of the stakes on the trailer as illustrated in Figure 1.

When stake 1 pivots in relation to socket 3 and at least one of said supporting protrusions 10 slides along end face 9 of socket 3, end 4 of stake 1 is made to shift outwards from being inserted up to the end into socket 3.

Said supporting protrusions 10 on the outer surface of stake 1 are realized as elongated curved pins (not shown), the longitudinal axis thereof being at an angle in relation to the longitudinal axis of the end of stake 1, corresponding to the angle of end face 9 of socket 3.

When stake 1 is being inserted up to the end into socket 3, the lateral surfaces of supporting protrusions 10 rest on end face 9 of socket 3.

When stake 1 pivots in relation to socket 3, for example hitting an obstacle, at least one supporting protrusion 10 slides along end face 9 of socket 3 and as a result end 4 of stake 1 shifts outwards from being inserted up to the end into socket 3, i.e. upwards from the position as illustrated in Figure 1.

As end face 9 of socket 3 is tilted, i.e. it is an inclined plane, then as a result of the force of gravity acting on stake 1, supporting protrusion 10 starts to slide on end face 9 resulting in stake 1 assuming its initial main working position, wherein end face 15 of end 4 of the stake rests on supporting surfaces 13 and 14, which have been provided as steps in the lower part of clamping hook 7.

Said supporting protrusions 10 can be also provided as pins mounted traverse in relation to the longitudinal axis of the tube end or the supporting protrusion attached to the outer surface of the stake may be provided as a tubular sleeve attached to the end of the stake, the end face of which towards the socket is at an angle in relation to the longitudinal axis of the end of the stake, corresponding to the angle of the end face of the socket (these embodiments are not depicted in the drawings).

Clamping hook 7 has notch 11 in the direction of the longitudinal axis of socket 3, in the direction and extent of which stake 1 when being locked in socket 3, permits end 4 of stake 1 to shift in the direction of the longitudinal axis of socket 3, i.e. up and down in socket 3.

Clamping hook 7 comprises also support-step 12, onto which in an unlocked position of end 4 of stake 1, locking ring 6 of stake 1 being inserted into socket 3 rests.

The pivoting angle α of stake 1 in socket 3 is limited by the width of cut-out 5 in locking ring 6.

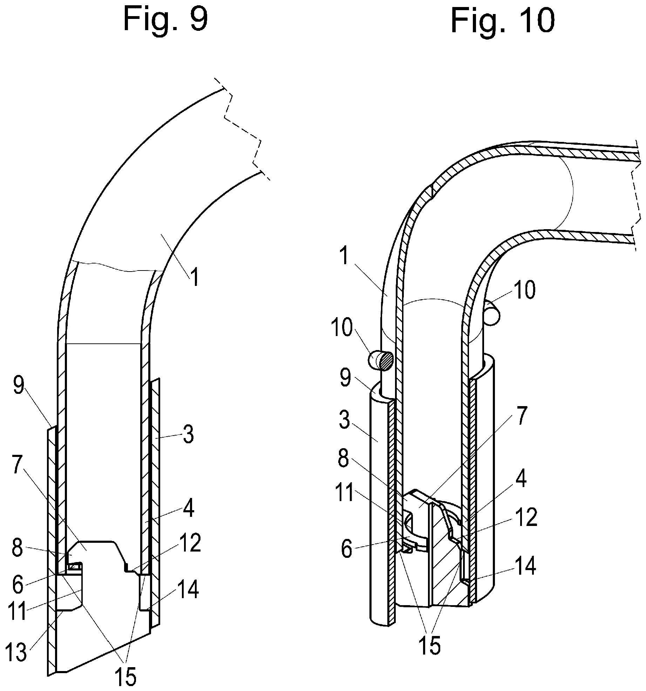

In order to remove stake 1 from socket 3, stake 1 must be turned into a position, wherein the end 8 of clamping hook 7 is placed in the area of out-cut 5 in locking ring 6, as has been illustrated in Figure 11 and 12. To accomplish this, stake 1 has first to be raised up, that corresponds to the positions as illustrated in Figure 9 and 10. Without raising stake 1 upwards it is not possible turn it into a position, wherein stake 1 can be removed from the socket 3. Not being raised upwards, stake 1 can only turn to the extent that is limited by the width of out-cut 5 in locking ring 6.

Supporting protrusions 10 act on end face 9 of socket 3 as sliding guides. As end face 9 is tilted in respect of the vertical and supporting protrusions 10 are rigidly fixed to the outer surface of end 4 of stake 1, then in any other position that differs from the positions as illustrated in Figure 1, 7 and 8, due to the force of gravity stake 1 through supporting protrusion 10 presses against tilted end face 9 and supporting protrusion 10 starts to slide on end face 9. As supporting protrusions 10 are rigidly fixed to stake 1, then as a result of sliding stake 1 assumes its initial position (the position corresponding to Figure 1, 7 and 8).

It is obvious to a person skilled in the art that the invention is not restricted to the above described embodiment and that within the scope of the claims other embodiments are possible.

### Reference signs list

- 1: - stake
- 2: - locking unit
- 3: - socket
- 4: - end of stake
- 5: - cut-out
- 6: - locking ring
- 7: - clamping hook
- 8: - end of clamping hook
- 9: - end face
- 10: - supporting protrusion
- 11: - notch in clamping hook
- 12: - support step in clamping hook
- 13: - supporting surface of the end of stake
- 14: - supporting surface of the end of stake
- 15: - end face of stake
- α: - permitted pivoting angle

## Claims

1. A locking unit (2) for a stake (1), said locking unit comprising a socket (3) for receiving an end (4) of the stake (1) and locking said end (4) of the stake (1) pivotally into said socket (3), **characterised in that** the end (4) of the stake (1) is formed as a tubular element, where proximate to the end (4) of stake (1) inside of said end there is a rigidly attached locking ring (6) having a radial cut-out (5), the plane of the locking ring (6) is perpendicular to the longitudinal axis of the end (4) of the stake (1), the socket (3) is formed as a cylindrical hollow component, into which a mainly plane clamping hook (7) has been rigidly fixed, whereas in a locked position of the stake (1) the end (8) of the clamping hook (7) is interlocked behind the locking ring (6) and whereas in an unlocked position of the stake (1) where said stake is removable from the socket (3), the end (8) of the clamping hook (7) is positioned in the cut-out (5) area of the locking ring (6).

2. The locking unit (2) according to claim 1, **characterised in that** the end face (9) of the socket (3) at the end of the socket receiving the end of the stake (1) is at an angle in relation to the longitudinal axis of the socket (3).

3. The locking unit (2) according to any previous claim, **characterised in that** in the proximity of the end of the stake (1) to be inserted into the socket (3) and outwardly from the socket (3), there is attached onto the outer surface of the stake (1) at least one supporting protrusion (10).

4. The locking unit (2) according to claim 3, **characterised in that** onto the outer surface of the stake (1) are fastened two supporting protrusions (10) on both sides of the end of the stake (1), said protrusions (10) being in the form of pins transverse to the longitudinal axis of the end (4) of the stake (1), where in the position where the end of the stake (1) fully inserted into the socket (3), said supporting protrusions (10) rest on the end face (9) of the socket (3), and when said stake (1) is pivoted in relation to the socket (3) at least one of said supporting protrusions (10) is caused to slide along the end face (9) of the socket (3) and the end (4) of the stake (1) is made to shift outwards from the position fully inserted into the socket (3).

5. The locking unit (2) according to claim 3, **characterised in that** the supporting protrusions (10) attached onto the outer surface of the stake (1) are provided as elongated curved elements, the longitudinal axis thereof being at an angle in relation to the longitudinal axis of the end (4) of the stake (1) and corresponding to the angle of the end face (9) of the socket (3) with respect to the longitudinal axis of the socket (9), whereby in the position where the end of the stake (1) fully inserted into the socket (3), the lateral surfaces of the supporting protrusions (10) rest on the end face (9) of the socket (3) and when said stake (1) is pivoted in relation to the socket (3) at least one of said supporting protrusions (10) is caused to slide along the end face (9) of the socket (3) and the end (4) of the stake (1) is made to shift outwards from the position fully inserted into the socket (3).

6. The locking unit (2) according to claim 3, **characterised in that** the supporting protrusion (10) attached to the outer surface of the stake (1) is provided as a tubular sleeve fixed onto the end (4) of the stake (1), the socket (3) side end face of said sleeve is at an angle to the longitudinal axis of the end (4) of the stake (1) that corresponds to the angle of the end face (9) of the socket (3) with respect to the longitudinal axis of the socket (3), whereby in the position where the end of the stake (1) fully inserted into the socket (3), the end face of said supporting protrusion (10) rests on the end face (9) of the socket (3) and when said stake (1) is pivoted in the socket (3) in relation to the socket (3), said end face of the supporting protrusion (10) is caused to slide along the end face (9) of the socket (3) and the end (4) of the stake (1) is made to shift outwards from the position fully inserted into the socket (3).

7. The locking unit (2) according to any previous claim, **characterised in that** the clamping hook (7) has a notch (11) in the direction of the longitudinal axis of the socket (3), in the direction and extent of which the end (4) of the stake (1) when being locked in the socket (3), permits the end (4) of the stake (1) to shift in the direction of the longitudinal axis of the socket (3).

8. The locking unit (2) according to any previous claim, **characterised in that** the clamping hook (7) comprises a support-step (12), onto which in an unlocked state of the end (4) of the stake (1), rests the locking ring (6) of the stake (1) when said stake is inserted into the socket (3).

9. The locking unit (2) according to any previous claim, **characterised in that** the pivoting angle (α) of the stake (1) in the socket (3) is limited by the width of the cut-out (5) in the locking ring (6).

10. The locking unit (2) according to any previous claim, **characterised in that** the clamping hook (7) comprises at least one supporting surface (13, 14) for supporting the end face (15) of the end (4) of the stake (1).

## Patentansprüche

1. Eine Verriegelungseinheit (2) für eine Stange (1), umfassend eine Fassung (3) um ein Ende (4) der Stange (1) zu erhalten und indem es das Ende (4) der Stange (1) drehbar in der genannten Fassung (3) verriegelt, **dadurch gekennzeichnet, dass** das Ende (4) dieser Stange (1) als ein rohrförmiges Element geformt ist, wo unmittelbar zum Ende (4) der Stange (1) in dem genannten Ende ein Verschlussring (6) fest angebracht ist, indem er eine radiale Kerbe (5) hat, die Fläche des Verriegelungsringes (6) ist senkrecht zur längslaufenden Achse des Endes (4) der Stange (1), die Fassung (3) als eine zylindrische, hohle Komponente geformt ist, in welche ein hauptsächlich flacher Schwenkspannhaken (7) fest angebracht ist, wobei es in einer verriegelten Position der Stange (1) das Ende (8) des Spannhakens (7) hinter dem Verriegelungsring (6) verriegelt ist und wobei in einer unverriegelten Position der Stange (1) wo die genannte Stange aus der Fassung (3) bewegt werden kann, das Ende (8) des Spannhakens (7) in einer Kerb (5) des Verriegelungsrings (6) positioniert ist.

2. Die Verriegelungseinheit (2) gemäß Anspruch 1, **dadurch gekennzeichnet, dass** an der Stirnseite (9) der Fassung (3) am Ende der die Fassung erhaltenden Endes der Stange (1) ein Winkel im Verhältnis zur längslaufenden Achse der Fassung (3) ist.

3. Die Verriegelungseinheit (2) gemäß einem der vorangehenden Ansprüche, **dadurch gekennzeichnet, dass** in die Nähe des Endes der Stange (1), das die Fassung (3) beinhalten soll und außerhalb der Fassung (3) an der äußeren Fläche der Stange (1) mindestens ein unterstützender Überstand (10) befestigt ist

4. Die Verriegelungseinheit (2) gemäß Anspruch 3, **dadurch gekennzeichnet, dass** auf die äußere Fläche der Stange (1) zwei unterstützende Überstände (10) auf beiden Seiten des Endes der Stange (1) befestigt werden, genannte Überstände (10) in Form von Pinnen quer zur Längsachse des Endes (4) der Stange (1), wo in der Position, wenn das Ende der Stange (1) voll in die Fassung (3) eingesteckt ist, die genannten Überstände (10) an der Stirnseite (9) der Fassung (3) ruhen, und wenn die genannte Stange (1) in Relation zur Fassung (3) geschwenkt wird, wird mindestens einer der unterstützenden Überstände (10) dazu veranlasst sich entlang der Stirnseite (9) der Fassung (3) zu schieben und das Ende (4) der Stange (1) wird dazu veranlasst sich aus der Position des völlig Eingestecktseins in der Fassung (3) zu bewegen.

5. Die Verriegelungseinheit (2) gemäß Anspruch 3, **dadurch gekennzeichnet, dass** die unterstützenden Überständen (10), die an der äußeren Fläche der Stange (1) befestigt sind, werden als länglich gebogene Elemente geliefert, die länglich Achse davon, die in einem Winkel zur längsverlaufenden Achse des Endes (4) der Stange (1) steht und mit der Achse der Stirnseite (9) der Fassung (3) hinsichtlich der längsverlaufenden Achse der Fassung (9) übereinstimmt, wobei in der Position, wo das Ende der Stange (1) voll in die Fassung (3) eingesteckt ist, die laterale Flächen der unterstützenden Überstände (10) auf der Stirnseite (9) der Fassung (3) aufliegen und wenn die genannte Stange (1) in Relation zur Fassung (3) geschwenkt wird, wird mindestens einer der genannten unterstützenden Überstände (10) dazu veranlasst sich entlang der Stirnseite (9) der Fassung (3) zu schieben und das Ende (4) der Stange (1) wird dazu veranlasst sich aus der Position des völlig Eingestecktseins in der Fassung (3) zu bewegen.

6. Die Verriegelungseinheit (2) entsprechen Anspruch 3, **dadurch gekennzeichnet, dass** der unterstützende Überstand (10), der an der äußeren Fläche der Stange (1) befestigt ist, wird als rohrförmige Hülse geliefert, die am Ende (4) der Stange (1) befestigt wird, die Seite der Stirnseite der Fassung (3) der genannten Hülse steht in einem Winkel zur längsverlaufenden Achse des Endes (4) der Stange (1) der mit dem Winkel der Stirnseite (9) der Fassung (3) hinsichtlich der längsverlaufenden Achse der Fassung (3) übereinstimmt, wobei in der Position in der das Ende der Stange (1), das ganz in der Fassung (3) eingesteckt ist, die Stirnseite der genannten unterstützenden Überstände (10) auf der Stirnseite (9) der Fassung (3) ruht und wenn die genannte Stange (1) in der Fassung (3) in Relation zur Fassung (3) geschwenkt wird, wird die genannte Stirnseite der unterstützenden Überstände (10) veranlasst sich entlang der Stirnseite (9) der Fassung (3) zu schieben und das Ende (4) der Stange (1) wird dazu veranlasst sich aus der Position des völlig Eingestecktseins in der Fassung (3) zu bewegen.

7. Die Verriegelungseinheit (2) gemäß einem der vorangehenden Ansprüche, **dadurch gekennzeichnet, dass** der Spannhaken (7) eine Nute hat (11) in der Richtung der längsverlaufenden Achse der Fassung (3) hat, in der Richtung und in dem Ausmaß welches Ende (4) der Stange (1), wenn es in der Fassung (3) verriegelt ist, dem Ende (4) ermöglicht der Stange (1) sich in der Richtung der längsverlaufende Achse der Fassung (3) zu schieben.

8. Die Verriegelungseinheit (2) gemäß einem der vorangehenden Ansprüche, **dadurch gekennzeichnet, dass** der Spannhaken (7) einen Unterstützungsschritt (12) umfasst, auf dem, in einem unverriegelten Stand des Endes (4) der Stange (1), der Verschlussring (6) der Stange (1) ruht, wenn die genannte Stange in die Fassung (3) gesteckt wird.

9. Die Verriegelungseinheit (2) gemäß einem der vorangehenden Ansprüche, **dadurch gekennzeichnet, dass** der Schwenkwinkel (a) der Stange (1) in der Fassung (3) durch die Breite des Ausschnittes (5) in den Verriegelungsring (6) beschränkt ist.

10. Die Verriegelungseinheit (2) gemäß einem der vorangehenden Ansprüche, **dadurch gekennzeichnet, dass** der Spannhaken (7) mindestens eine unterstützende Oberfläche (13, 14) umfasst, um die Stirnseite (15) des Endes (4) der Stange (1) zu stützen.

## Revendications

1. Une unité de verrouillage (2) pour un piquet (1), ladite unité de verrouillage comprenant une douille (3) pour recevoir une extrémité (4) de piquet (1) et verrouiller ladite extrémité (4) du piquet (1) de manière pivotante dans ladite douille (3), **caractérisé en ce que** l'extrémité (4) du piquet (1) est formée comme un élément tubulaire, où, à proximité de l'extrémité (4) du piquet (1) à l'intérieur de ladite extrémité, il y a une bague de blocage (6) fixée rigidement, avec une découpe radiale (5), le plan de la bague de blocage (6) est perpendiculaire à l'axe longitudinal de l'extrémité (4) du piquet (1), la douille (3) est réalisée sous la forme d'un composant creux cylindrique, dans lequel un crochet de serrage principalement plan (7) a été fixé rigidement, tandis que, dans une position verrouillée du piquet (1), l'extrémité (8) du crochet de serrage (7) est emboîtée derrière la bague de blocage (6) et que, dans une position déverrouillée du piquet (1) où ledit piquet est amovible de la douille (3), l'extrémité (8) du crochet de serrage (7) est positionnée dans la découpe (5) de la bague de blocage (6).

2. Unité de verrouillage (2) selon la revendication 1, **caractérisé en ce que** la face d'extrémité (9) de la douille (3) à l'extrémité de la douille recevant l'extrémité du piquet (1) fait un angle par rapport à l'axe longitudinal de la douille (3).

3. L'unité de verrouillage (2) selon l'une quelconque des revendications précédentes, **caractérisé en ce que,** à proximité de l'extrémité du piquet (1) à insérer dans la douille (3) et vers l'extérieur de la douille (3), au moins une saillie de support (10) est fixée sur la surface extérieure du piquet (1).

4. Unité de verrouillage (2) selon la revendication 3, **caractérisé en ce que** sur la surface extérieure du piquet (1) sont fixées deux saillies de support (10) des deux côtés de l'extrémité du piquet (1), lesdites saillies (10) se présentant sous la forme de broches transversales à l'axe longitudinal de l'extrémité (4) du piquet (1), dans la position où l'extrémité du piquet (1) est complètement insérée dans la douille (3), lesdites saillies de support (10) reposent sur la face d'extrémité (9) de la douille (3), et lorsque ledit piquet (1) est pivoté par rapport à la douille (3), au moins une desdites saillies de support (10) est amenée à coulisser le long de la face d'extrémité (9) de la douille (3) et l'extrémité (4) du piquet (1) est décalé vers l'extérieur de la position complètement insérée dans la douille (3).

5. Unité de verrouillage (2) selon la revendication 3, **caractérisé en ce que** les saillies de support (10) fixées sur la surface extérieure du piquet (1) sont agencées sous la forme d'éléments incurvés allongés, leur axe longitudinal fait un angle par rapport à l'axe longitudinal de l'extrémité (4) du piquet (1) et correspond à l'angle de la face d'extrémité (9) de la douille (3) par rapport à l'axe longitudinal de la douille (9), dans lesquels, dans la position où l'extrémité du piquet (1) est complètement insérée dans la douille (3), les surfaces latérales des saillies de support (10) reposent sur la face d'extrémité (9) de la douille (3) et, lorsque ledit piquet (1) est pivoté par rapport à la douille (3), au moins l'une desdites saillies de support (10) est amené à glisser le long de la face frontale (9) de la douille (3) et que l'extrémité (4) du piquet (1) est décalée vers l'extérieur à partir de la position complètement insérée dans la douille (3).

6. Unité de verrouillage (2) selon la revendication 3, **caractérisé en ce que** la saillie de support (10) fixée à la surface extérieure du piquet (1) est prévue sous la forme d'un manchon tubulaire fixé à l'extrémité (4) du piquet (1), la face d'extrémité latérale de la douille (3) dudit manchon forme un angle avec l'axe longitudinal de l'extrémité (4) du piquet (1) qui correspond à l'angle de la face d'extrémité (9) de la douille (3) avec par rapport à l'axe longitudinal de la douille (3), dans lesquels, dans la position où l'extrémité du piquet (1) est complètement insérée dans la douille (3), la face d'extrémité de ladite saillie de support (10) repose sur la face d'extrémité (9) de la douille (3) et lorsque ledit piquet (1) est pivoté dans la douille (3) par rapport à la douille (3), on fait glisser ladite face d'extrémité de la saillie de support (10) le long de la face d'extrémité (9) de la douille (3) et on fait glisser l'extrémité (4) du piquet (1) vers l'extérieur à partir de la position complètement insérée dans la douille (3).

7. L'unité de verrouillage (2) selon l'une quelconque des revendications précédentes, **caractérisé en ce que** le crochet de serrage (7) présente une encoche (11) dans la direction de l'axe longitudinal de la douille (3), dans le sens et l'étendue dont l'extrémité (4) du piquet (1) est verrouillée dans la douille (3), permet à l'extrémité (4) du piquet (1) de se déplacer dans la direction de l'axe longitudinal de la douille (3).

8. L'unité de verrouillage (2) selon l'une quelconque des revendications précédentes, **caractérisé en ce que** le crochet de serrage (7) comprend une marche d'appui (12), sur lequel dans un état déverrouillé l'extrémité (4) du pieu (1), repose la bague de blocage (6) du piquet (1) lorsque ledit piquet est inséré dans la douille (3).

9. L'unité de verrouillage (2) selon l'une quelconque des revendications précédentes, **caractérisé en ce que** l'angle de pivotement (a) du piquet (1) dans la douille (3) est limité par la largeur de la découpe (5) dans la bague de verrouillage (6).

10. L'unité de verrouillage (2) selon l'une quelconque des revendications précédentes, **caractérisé en ce que** le crochet de serrage (7) comprend au moins une surface de support (13, 14) pour supporter la face d'extrémité (15) de l'extrémité (4) du piquet (1).
